# EUROPEAN PATENT APPLICATION

(11) **EP 1 067 702 A1**
(43) Date of publication of application: **10.01.2001**
(21) Application number: 99440109.9
(22) Date of filing: 14.05.1999
(51) Int. Cl.: H04B 1/707

(54) **Electrical correlator**

(71) Applicant: ALCATEL, 75008 Paris (FR)
(72) Inventor: Mortensen, Ivar, Dr.-Ing, 70825 Korntal (DE)
(74) Representative: Schäfer, Wolfgang, Dipl.-Ing.

(57) **Abstract**

An electrical correlator (30) circuit is described, comprising:
a first number (S) of accumulators (31),
each of said accumulators (31) having an input and an output, and each of said accumulators (31) having a deepness of a second number (W*P),
a first number (S) of multipliers (32),
each of said multipliers (32) having two inputs, one of said two inputs of all multipliers (32) being coupled together,
wherein a sampled signal (S(n)) is provided to said inputs of said multipliers (32) being coupled together and wherein a coded signal (Ci(m)) is provided to said inputs of said multipliers (32) not being coupled together,
and each of said multipliers (32) having an output being coupled to one of said accumulators (31).

## Description

The invention relates to an electrical correlator circuit in particular for use in a telecommunication system.

In Direct Sequence Code Division Multiple Access (DS-CDMA) cellular telecommunication systems, a base station communicates with a number of mobile stations. In such systems, electrical correlators are used for several purposes.

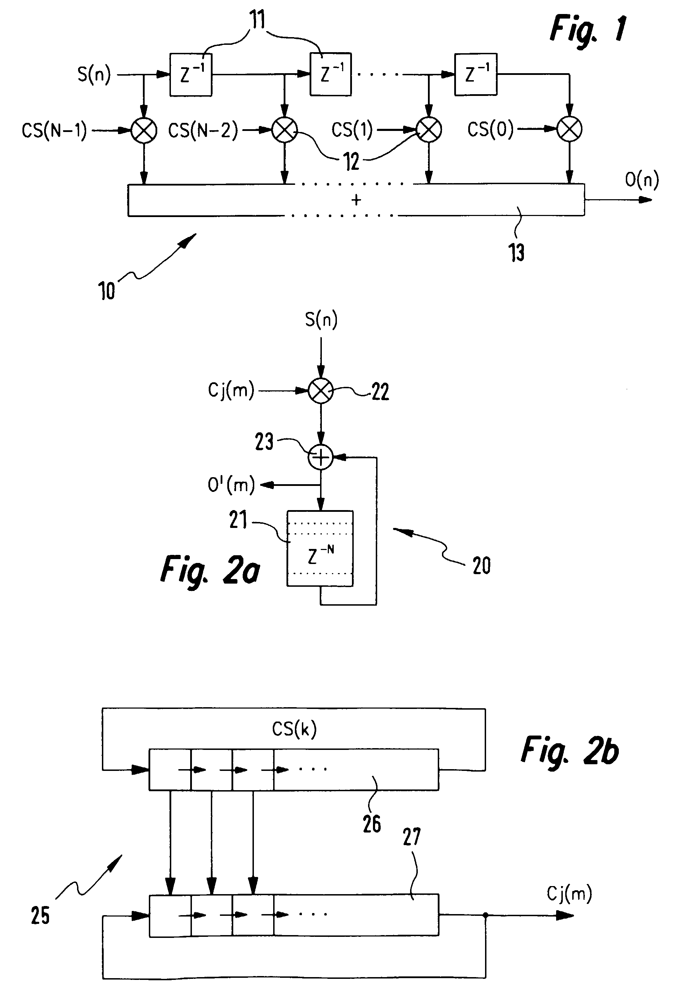

Figure 1 shows a schematic block diagram of a first known possibility. There, a number of multiphers, adders and memory cells are put together to form a matched filter correlator 10.

A sampled signal S(n) is input into a first of a number of subsequent delaying blocks 11 and is then passed to the respective next delaying block 11. The sampled signal S(n) and the output signals of all delaying blocks 11 are also input into one of a number of multipliers 12. The other inputs of these multipliers 12 are the consecutive digits of a coded signal CS(N-1), CS(N-2) ... CS(0). The output signals of the multipliers 12 are passed in parallel to an accumulator 13 which generates a seriell output signal O(n).

The coded signal CS(N-1), CS(N-2) ... CS(0) is fixed and has a spreading factor equal to N. This coded signal CS is a subsequence of the length N of a possibly longer sequence C which has a length of F. Normally, F is much greater than N but this is not a necessary condition. The sampled signal S(n) is varying depending e.g. on the information received by a mobile station.

The sampled signal S(n) is passed through the chain of delaying blocks 11 and is stepwise compared with the coded signal CS(N-1), CS(N-2) ... CS(0). The value of the output signal 0(n) increases, the more digits of the sampled signal S(n) are identical with the corresponding digits of the coded signal CS(N-1), CS(N-2) ... CS(0).

If the output signal O(n) reaches a maximum, the sampled signal S(n) and the coded signal CS(N-1), CS(N-2) ... CS(0) are synchronous.

It is therefore possible to synchronize the clocking signals of e.g. the base station and a mobile station by introducing the matched filter correlator 10 of figure 1 into a receiver of the base station or the mobile station.

Figure 2a shows a schematic block diagram of a known alternative realization of the matched filter correlator 10 of figure 1.

In figure 2a, a correlator 20 is shown with only one accumulator 21 which has a deepness of N, i.e. which offers N storage locations. A multiplier 22 is provided, to which the sampled signal S(n) and a coded signal Cj(m) is provided. The spreading factor of the coded signal Cj(m) is N and its length is N*N.

The coded signal Cj(m) of figure 2a is a sequence which is built from a coded signal CS(k) according to figure 2b.

The circuit 25 of figure 2b comprises a first FIFO 26 and a second FIFO 27. The length of the FIFOs 26, 27 is N. It is assumed that the oversampling factor W = 1 and that the first FIFO 26 runs with the speed k. Then, the second FIFO 27 runs with a speed which is N times greater than the speed of the first FIFO 26, i.e. with the speed N*k. The first FIFO 26 is feeded with the coded signal CS(k). The output, i.e. the coded signal Cj(m) is taken from the second FIFO 27. The coded signal CS(k) is forwarded cyclically within the first FIFO 26. For every clock cycle (k), the first FIFO 26 is copied to the second FIFO.

In figure 2a, as described, the multiplier 22 is feeded with the sampled signal S(n) and the coded signal Cj(m). The output signal of the multiplier 22 is input to an adder 23 which further receives an input signal from the output of the accumulator 21. An output signal O'(m) of the adder 22 is input into the accumulator 21.

The speed of the coded signal Cj(m) is N times of the speed of the sampled signal S(n). Therefore, as long as one and the same sampled signal S(x) is provided to the multiplier 22, N digits of the coded signals Cj(m) are consecutively provided to this multiplier 22.

Due to the increased speed of the coded signal Cj(m), the accumulator 21 also has to be clocked with this increased frequency.

From the output signal O'(m) of the correlator 20 of figure 2, an output signal may be derived which is equal to the output signal O(n) of the correlator 10 of figure 1.

All signals mentioned above except the clocking signals may be either real or complex signals.

A second, not-shown possible purpose of the use of electrical correlators is similar to the above described first possibility. It is the possibility of tracking two signals. In this case, it is assumed that an approximate time interval is known in which the two signals are synchronous. Therefore, not all of the correlators needed in figure 1 are necessary for such tracking.

A third, not-shown possible purpose of the use of a single electrical correlator is the function of despreading a signal out of a composite signal. Such despreading is performed e.g. to extract the information bearing signal out of the received signal e.g. at a mobile station when synchronization has already been obtained.

However, when speaking of despreading, it has to be distinguished between the codelength F and the spreading factor N. Usually, F is much greater than N. In a despreader, the content of a "memory" is written to an output every N input samples, i.e. depending on the spreading factor N.

The matched filter correlator 10 of figure 1 is only used during an acquisition phase of the receiver of a mobile station. Afterwards, the correlator 10 is out of use. Due to the specific structure of the correlator 10, it may also not be used for another purpose, e.g. for tracking or for despreading purposes. Therefore, this correlator 10 has the disadvantage that it is unused most of the time.

Beside the fact that the correlator 20 of figure 2a requires an increased frequency which is very difficult to provide, it has the same disadvantages as mentioned above in connection with the correlator 10 of figure 1.

The single despreading correlator may be realized without any problem, but as it usually has a quite distinctive structure, it may also not be used for any other purpose.

Summarized, the correlators described above may be characterized as being useful for only one purpose. This requires the realization of an increased number of correlators with the consequence of increased hardware expenditure and thereby increased costs.

It is therefore an object of the invention to provide an electrical correlator circuit which may be used more flexible and which therefore requires less hardware circuits and therefore less costs.

According to the invention, this object is solved by an electrical correlator circuit which comprises:
a first number of accumulators,
each of said accumulators having an input and an output, and each of said accumulators having a deepness of a second number,
a first number of multipliers,
each of said multipliers having two inputs, one of said two inputs of all multipliers being coupled together, wherein a sampled signal is provided to said inputs of said multipliers being coupled together and wherein a coded signal is provided to said inputs of said multipliers not being coupled together,
and each of said multipliers having an output being coupled to one of said accumulators.

The second number representing the deepness of the accumulator may be selected smaller than the spreading factor. This has the advantage that the speed with which the coded signal has to be provided, is in a range which still remains acceptable with respect to the expenditure for the required hardware and the corresponding costs.

In an embodiment of the invention, said coded signal has a spreading factor which equals the product of the first number and the second number. This provides the advantage that the same or even a larger spreading factor may be reached by an appropriate first number of accumulators.

The above mentioned object is also solved according to the invention by a correlator building block which comprises:
one accumulator, one multiplier and one adder which are coupled together to constitute a building block which is usable independently of other such building blocks
wherein a number of building blocks may form a correlator circuit.

The building block enables the possibility to build up any required correlator circuits at any point in time. For example, a number of building blocks may be coupled together to form a matched filter correlator. As well, the building blocks may be used separately and independently e.g. for despreading purposes.

In a further embodiment of the invention, the correlator building block further comprises:
an input for receiving a first coded signal and an output for providing a second coded signal to a possible next building block.

The input and the output for the coded signal constitute an important feature of the cascadablilty of the building blocks. These inputs and outputs may be connected together when a number of building blocks are coupled together consecutively.

In an advantageous embodiment of the invention, a number of said building blocks are cascadable. This facilitates the possibility to couple together a number of such building blocks. No complex coupling connections are necessary. Instead, the cascadable building blocks may just be coupled from their outputs to their inputs.

In an advantageous embodiment of the invention, the correlator building block is integrated in an integrated circuit. In particular, multiple such building blocks are incorporated in an Application Specific Integrated Circuit (ASIC). This leads to a multi-purpose ASIC for correlator applications.

The correlator circuit or the correlator building block may advantageously be used in a telecommunication system. In particular, a mobile station of a telecommunication system and/or a receiver of a telecommunication system may include the electrical correlator circuit or including the correlator building block.

Further embodiments as well as further advantages of the invention are outlined in the following description of the enclosed figures.
- Figure 3: shows a schematic block diagram of an embodiment of an electrical correlator circuit according to the invention,
- figure 4: shows a schematic block diagram of an embodiment of a correlator building block according to the invention,
- figure 5: shows a schematic block diagram of an embodiment of a cascadable correlator building block according to the invention, and
- figure 6: shows a schematic block diagram of an embodiment of a circuit for creating a coded signal.

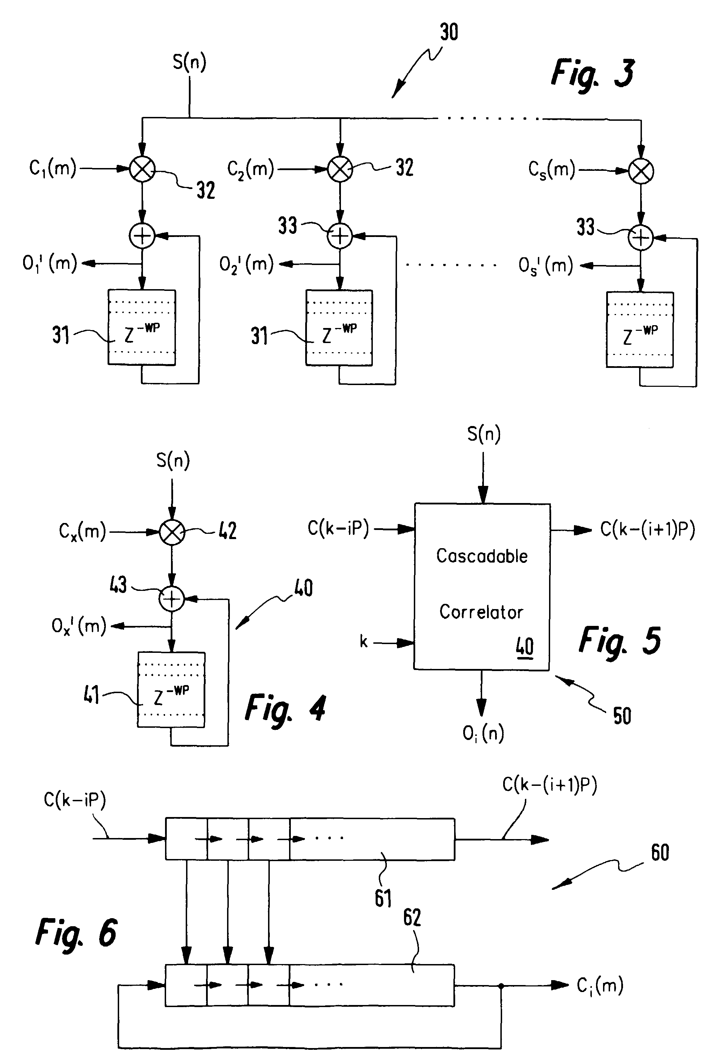

Figure 3 shows a correlator circuit 30 which may be used in a telecommunication system as a matched filter correlator. In particular, the circuit 30 may be used in a receiver of a mobile station of the telecommunication system.

It is assumed that the correlator circuit 30 is provided with a sampled signal S(n) which is identical with the sampled signals described in connection with figures 1 and 2a or an oversampled version of these signals. Furthermore, it is assumed that a coded signal Ci(m) is provided which is related to an original code sequence C(k) according to figure 6 and being described later.

The transmitted DS-CDMA signal has a chip speed k. The chip speed k is related to an elementary pulse of the coded signal. The sample speed of the incoming sampled signal S(n) equals W times the speed k so that n = W*k. W is the oversampling factor of the DS-CDMA signal.

The correlator circuit 30 comprises a first number S of accumulators 31. Each of the accumulators 31 has a deepness of a second number which equals a multiplication of the oversampling factor W and a factor P. The factor P may be calculated from the equation N = P * S. Therefore, the second number is W * N / S = W * P. This means that each of the accumulators 31 is able to store W*P signals consecutively.

The correlator circuit 30 comprises said first number S of multipliers 32. Each of the multipliers 32 receives as an input the sampled signal S(n). Furthermore, each of the multipliers 32 receives as an input a specific coded signal Ci(m) with i=1...S.

Each of the multipliers 32 receives one of these coded signals Ci(m). From left to right in figure 3, the first multiplier 32 receives a coded signal C1(m), the second multiplier 32 receives a coded signal C2(m), and so on. The last multiplier 32 finally receives a coded signal CS(m).

These coded signals Ci(m) are passed to the multipliers 32 with a speed which equals W*P times the clocking speed k of the correlator circuit 30 so that m = W*P*k.

Furthermore, the correlator circuit 30 comprises said first number S of adders 33. Each of the adders 33 receives as an input the output signal of one of the multipliers 32 and the output signal of one of the accumulators 31. Each of the adders 33 produces an output signal Oi'(m) with i=1...S, which is passed to the corresponding accumulator 31.

The accumulators 31 do not need to have a deepness equal to the spreading factor N but only the smaller deepness W * P. As already mentioned, this has the consequence that the speed of the coded signal Ci(m) is only W*P times of the speed k which is smaller than N times of the clocking speed k.

Figure 4 shows a correlator building block 40 which may be used to build up the correlator circuit 30 of figure 3 as well as other required correlator circuits.

The correlator building block 40 comprises one accumulator 41, one multiplier 42 and one adder 43. The multiplier 42 may receive the sampled signal S(n) as an input. Furthermore, the multiplier 42 may receive a coded signal Cx(m) as well as an input.

The transmitted DS-CDMA signal has a chip speed k. The sample speed of the incoming sampled signal S(n) equals W times the clocking speed k. W is the oversampling factor of the DS-CDMA signal. The coded signal Cx(m) may be a part of the coded signal Ci(m) as described in connection with figure 3. The speed of the coded signal Cx(m) equals W*P the speed k.

The output signal of the multiplier 42 is passed as an input to the adder 43. Furthermore, the adder 43 receives the output signal of the accumulator 41 as an input. The adder 43 generates an output signal Ox'(m) which is passed to the accumulator 41 as an input.

The accumulator 41 of the building block 40 has a deepness of W*P which corresponds to the speed of the coded signal Cx(m).

The correlator building block 40 of figure 4 may be used to build up the correlator circuit 30 of figure 3. For that purpose, the number S of such building blocks 40 have to be taken together. Each of these building blocks 40 has to be provided with the sampled signal S(n). Furthermore, each of the building blocks 40 has to receive a part of the coded signal Cx(m) as described in connection with figure 3.

Then, the number S of correlator building blocks 40 may be used in the same way as the correlator circuit 30 of figure 3.

However, the correlator building blocks 40 of figure 4 may also be used to build up other correlator circuits which are required e.g. in a telecommunication system. For example, the correlator building blocks 40 may be used for tracking purposes or for despreading purposes.

Such different uses may be performed in a varying sequence, i.e. the building blocks 40 may be first put together to build e.g. the correlator circuit 30 of figure 3 and may then be used independently from each other for despreading purposes. This means that the building blocks 40 may be used independently from each other in a first point in time and coupled together in a second point in time.

Figure 5 shows a cascadable correlator building block 50 which incorporates the correlator building block 40 of figure 4. Therefore, the accumulator 41, the multiplier 42 and the adder 43 as well as the connections of these parts as shown in figure 4, are included in the building block 50 of figure 5.

In addition to the building block 40 of figure 4, the building block 50 of figure 5 is cascadable. This means that a number of building blocks 50 may be coupled together consecutively.

For that purpose, the cascadable correlator building block 50 comprises an input which receives a first coded signal C(k-iP), and an output which provides a second coded signal C(k-(i+1)P). The second coded signal C(k-(i+1)P) is generated by the building block 50 depending on the first coded signal C(k-iP). P is one factor of the deepness of the accumulator 42 which is equal to W*P as described in connection with figure 4.

The generation of the second coded signal C(k-(i+1)P) may be done by an appropriate delaying circuit which may be also incorporated in the cascaded correlator building block 50.

The generation of the coded signal Ci(m) from the received first coded signal C(k-iP) is shown in figure 6. There, a circuit 60 is shown which may also be incorporated in the cascaded correlator building block 50 of figure 5.

The circuit 60 of figure 6 comprises a first FIFO 61 which is feeded with the coded signal C(k-iP). The coded signal C(k-iP) is forwarded within the FIFO 61 stepwise with the speed k. The length of the FIFO 61 equals P.

Every clock cycle, all of the P storage locations of the FIFO 61 are also passed to a second FIFO 62. This FIFO 62 has the same length P as the FIFO 61 so that any of the storage locations of the FIFO 61 is coupled to exactly one of the storage locations of the FIFO 62. Therefore, the contents of the FIFO 61 is transferred to the FIFO 62 in parallel every clock cycle.

The speed of the second FIFO 62 is m = W*P*k, i.e. P times the speed k with the oversampling factor W = 1. Furthermore, the output of the FIFO 62 is coupled to the input of the FIFO 62. Therefore, during one clock cycle of the clocking signal k, the contents of the FIFO 62 is rotated one time around and W * P samples are produced at the output.

This results in an output signal Ci(m) at the output of the second FIFO 62 which has a speed of P times the speed k. If the oversampling factor W being greater than 1, the circuit 60 of figure 6 has to be adapted appropriately.

All described signals except the clocking signals may be real or complex signals. This has respective implications on the used multipliers, adders and memory cells.

The cascaded correlator building block 50 receives the clocking signal k and the sampled signal S(n). It generates the output signal Oi(n).

The realization of the output signal Oi(n) may be performed by an appropriate switching circuit which may also be incorporated in the cascaded correlator building block 50.

The cascaded correlator building block 50 of figure 5 including the circuit 60 of figure 6 and including further circuits as described above may be coupled with another identical cascaded correlator building block 50 by connecting the output for the coded signal of the first building block with the input for the coded signal of the second building block. This procedure may be continued with a required number of building blocks 50. The sampled signal S(n) may be connected together and provided to all of the coupled building blocks 50. The output signal Oi(n) may then be generated from the outputs of the coupled building blocks 50.

The cascaded correlator building block 50 of figure 5 including the circuit 60 of figure 6 and including further circuits as described above may also be used independently e.g. for despreading purposes. The building block 50 may then be configured as required via the input of the coded signal. The respective outputs are usually not relevant in this case.

As well, a number of the building blocks 50 may be put together for the purpose of tracking. In this case, the building blocks 50 may be cascaded as described above. However, it is also possible to combine the building blocks 50 uncascaded.

All these possibilities may be used in different points of time. This means that the building blocks 50 may be first of all used for building up a matched filter correlator in an acquisition phase of a mobile station of a telecommunication system. In a later point of time, the separate building blocks 50 may be used independently e.g. for despreading purposes.

The change of use of the building blocks 50 is thereby reached by changing the connection of the inputs and outputs of the building blocks. Such change of connection may be realized by switches or the like which are assigned to these inputs and outputs.

A number of the cascaded correlator building blocks 50 may be integrated on an Application Specific Integrated Circuit (ASIC). As well, the above mentioned switches may be integrated on the ASIC. Furthermore, the switching position of the switches may be controlled by appropriate input signals to the ASIC. Thereby, it is possible to change the purpose of the building blocks 50 by changing the switching position of the switches.

The result is a multi-purpose ASIC providing the possibility to build up any required correlator circuit at any point in time.

## Claims

1. An electrical correlator (30) circuit comprising:
a first number (S) of accumulators (31),
each of said accumulators (31) having an input and an output, and each of said accumulators (31) having a deepness of a second number (W*P),
a first number (S) of multipliers (32),
each of said multipliers (32) having two inputs, one of said two inputs of all multipliers (32) being coupled together, wherein a sampled signal (S(n)) is provided to said inputs of said multipliers (32) being coupled together and wherein a coded signal (Ci(m)) is provided to said inputs of said multipliers (32) not being coupled together,
and each of said multipliers (32) having an output being coupled to one of said accumulators (31).

2. The correlator circuit (30) of claim 1, further comprising:
a first number (S) of adders (33),
each of said adders (33) coupling said output of one of said accumulators (31) to the corresponding input,
and each of said multipliers (32) having its output coupled to one of said adders (33).

3. The correlator circuit (30) of claim 2, wherein an output signal (Oi'(m)) is produced at the outputs of said adders (33).

4. A correlator building block (40, 50) comprising:
one accumulator (41), one multiplier (42) and one adder (43) which are coupled together to constitute a building block which is usable independently of other such building blocks,
wherein a number of building blocks may form a correlator circuit.

5. The correlator building block (50) of claim 4, further comprising:
an input for receiving a first coded signal C(k-iP) and an output for providing a second coded signal C(k-(i+1)P) to a possible next building block (50).

6. The correlator building block (50) of claim 4, wherein a number of said building blocks are cascadable.

7. A mobile station of a telecommunication system including an electrical correlator circuit (30) comprising:
a first number (S) of accumulators (31),
each of said accumulators (31) having an input and an output, and each of said accumulators (31) having a deepness of a second number (W*P),
a first number (S) of multipliers (32),
each of said multipliers (32) having two inputs, one of said two inputs of all multipliers (32) being coupled together, wherein a sampled signal (S(n)) is provided to said inputs of said multipliers (32) being coupled together and wherein a coded signal (Ci(m)) is provided to said inputs of said multipliers (32) not being coupled together,
and each of said multipliers (32) having an output being coupled to one of said accumulators (31).

8. A mobile station of a telecommunication system including a correlator building block (40, 50) comprising:
one accumulator (41), one multiplier (42) and one adder (43) which are coupled together to constitute a building block which is usable independently of other such building blocks,
wherein a number of building blocks may form a correlator circuit.

9. A receiver of a telecommunication system including an electrical correlator circuit (30) comprising:
a first number (S) of accumulators (31),
each of said accumulators (31) having an input and an output, and each of said accumulators (31) having a deepness of a second number (W*P),
a first number (S) of multipliers (32),
each of said multipliers (32) having two inputs, one of said two inputs of all multipliers (32) being coupled together, wherein a sampled signal (S(n)) is provided to said inputs of said multipliers (32) being coupled together and wherein a coded signal (Ci(m)) is provided to said inputs of said multipliers (32) not being coupled together,
and each of said multipliers (32) having an output being coupled to one of said accumulators (31).

10. A mobile station of a telecommunication system including a correlator building block (40, 50) comprising:
one accumulator (41), one multiplier (42) and one adder (43) which are coupled together to constitute a building block which is usable independently of other such building blocks,
wherein a number of building blocks may form a correlator circuit.
